# EUROPEAN PATENT SPECIFICATION

(11) **EP 0 596 938 B1**
(45) Date of publication and mention of the grant of the patent: **07.10.1998**
(21) Application number: 92915985.3
(22) Date of filing: 30.07.1992
(51) Int. Cl.: C01B 15/023

(54) **PROCESS FOR THE PREPARATION OF HYDROGEN PEROXIDE**
VERFAHREN ZUR HERSTELLUNG VON WASSERSTOFFPEROXID
PROCEDE DE PREPARATION DE PEROXYDE D'HYDROGENE

(30) Priority: 31.07.1991 FI 913649
(43) Date of publication of application: 18.05.1994
(73) Proprietor: KEMIRA OY, SF-02271 Espoo (FI)
(72) Inventor: TURUNEN, Ilkka, SF-90540 Oulu (FI); PUKKINEN, Arto, SF-90450 Kempele (FI); MÄKINIEMI, Esko, SF-90940 Jääli (FI); MAUNULA, Teuvo, SF-90650 Oulu (FI)
(74) Representative: Meyer, Ludgerus A., Dipl.-Ing.
(86) International application number: FI9200222
(87) International publication number: WO9302960

(56) References cited:
- EP-A- 102 934
- EP-A- 384 905
- GB-A- 2 229 431

## Description

The invention relates to the preparation of hydrogen peroxide by the so-called anthraquinone process and more precisely its part process, hydrogenation.

It is known that hydrogen peroxide can be prepared by a so-called anthraquinone process. In this process an anthraquinone derivative is dissolved to a solvent consisting of one or more components. The solution so prepared is called the working solution. In the preparation of hydrogen peroxide the working solution is first led to the hydrogenation step. In this step the anthraquinone derivatives are hydrated in the presence of a catalyst to the corresponding anthrahydroquinone derivatives:

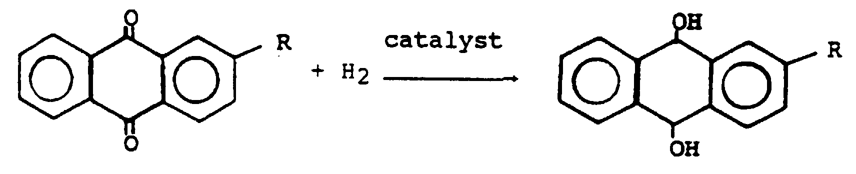

Thereafter the working solution is led to the oxidation step, where the anthrahydroquinone derivatives are oxidised with air or oxygen. Hydrogen peroxide is hereby formed and the anthrahydroquinone derivatives are returned to the form they had before the hydrogenation, i.e., as anthraquinone derivatives. The working solution containing hydrogen peroxide is led to the extraction step where hydrogen peroxide is transferred from the working solution by extraction to a water solution. The extracted working solution is dried from excessive water and returned to the beginning of the cycle process, the hydrogenation. The water solution of hydrogen peroxide obtained by extraction is purified and concentrated.

Different types of suspension and fixed bed reactors have been used in the hydrogenation step of the hydrogen peroxide process. Comparing these reactors, one of the most important criterions is the yield calculated in proportion to the reaction volume, or the mass unit of the catalyst. An other important criterion is the high selectivity of the hydrogenation, i.e., the desired ratio of the conversions between the main reaction and the side reactions. Further it is of importance that a high yield in respect of the anthrahydroquinone derivatives is obtained with as small excess of hydrogen as possible. Other factors that have to be taken into account in the comparison include the differences in the auxiliary instruments of the hydrogenation such as e.g. in the filtration of the catalyst, and the differences in the operations maintaining hydrogenation such as the regeneration of the catalyst. Thus there are many essential criterions in the comparison, and hardly any of the reactors used is best in every respect. A relatively wide point of view in the comparison is of course the examination of the total costs of the hydrogenation.

The yield and selectivity of the reactor depend in the first place on the hydrogenation pressure and temperature, the contents of the reactants, the amount and activity of the catalyst, the mixing conditions, and the retention time of the reaction mixture in the reactor. The reaction rate itself is to a great extent dependent on the catalyst properties. Besides the reaction speed the hydrogenation speed is also influenced by the material transfer, especially the transfer of hydrogen from the gas to the liquid and further on the catalyst surface. Advantageous conditions are thus very important for the material transfer. There is an optimum of hydrogenation pressure and temperature in respect of the yield and selectivity of the hydrogenation. In order to be able to carry out the hydrogenation as near these conditions as possible it is preferable that the reactor pressure and temperature are varied within as narrow range as possible.

As suspension catalyst a spongy, so-called palladium charcoal or Raney nickel have been used, or also palladium which has been fixed on a carrier (active charcoal, aluminum oxide). When a suspension catalyst is used, the reactor can e.g. be of the type of a mixing vessel. Also a suspension reactor is known operating with a so-called mammoth pump principle (air lift) (GB Patent Specification No. 718 307). Further, pipe reactors are known wherein the mixing is caused either by the turbulence due to the high flow rate (US Patent Specification No. 4 428 923), variations of the pipe diameter (US Patent Specification No. 3 423 176), or statical mixers (FI Patent Application No. 864 971).

Suspension reactors have, anyhow, several adverse factors compared to fixed bed reactors. Firstly, when using a suspension catalyst, a efficient filtration is needed after the hydrogenation because catalyst must not come into the oxidation step at all. This filtration often is very expensive and technically problematic requiring complex flow arrangements. The filtration is also hampered by the fact that the catalyst particles are very small.

When using a suspension reactor, the expensive catalyst often is in large part somewhere else than in the reactor, namely in the filtration equipment and the circulation vessel and the pipe systems. A part of the catalyst can be adhered even for a long period on the solid surfaces of these apparatuses. Consequently only a part of the catalyst is in the reaction space where it is of any use.

A third adverse factor of the suspension reactor is the bigger susceptibility of the catalyst to mechanical wearing. This can partly contribute to the fact that in a fixed bed reactor the catalyst usually retains its activity longer than the suspension catalyst.

These three adverse factors do not exist when the catalyst is fixed into solid carrier structures wherein it is called a fixed bed reactor. A typical fixed bed reactor contains layers of particles having usually a diameter 0.2-10 mm. The carrier in these particles is some porous material with a large specific surface such as e.g. aluminum oxide, activated carbon or silica gel. To the carrier some precious metal has been impregnated as the catalyzing component, in this case usually palladium. In the hydrogenation the working solution and hydrogen are flowing through the catalyst bed.

The fixed bed reactor above is suffering from several facts which hamper the efficiency of the hydrogenation. Firstly, the transfer of hydrogen from gas to liquid and further on the catalyst surface in the liquid is not very rapid in this kind of an equipment. Additionally the structure of the catalyst bed is such that there is easily occurring canalization of flow, i.e., gas and liquid are in some places separating as traces of their own. This is considerably slowing down the material transfer in the reactor. Further there are such difficulties in this type of catalyst bed that the material transfer into the pores of the solid particles is slow for which reason only catalyst on the surface is in effective use.

In order to make the dissolution of hydrogen easier, US Patent Specification No. 3 565581 described a fixed bed reactor, wherein a catalyst layer and an inert carrier layer are alternating. That invention is, anyhow, adding the volume of the reactor and thus even the volume of the expensive working solution.

Further in order to make the dissolution of hydrogen more effective it has been presented (US Patent Specification No. 2 837 411) a process where the working solution is saturated with hydrogen in a separate vessel before the reactor. Also the use of this invention leads to enlarged amount of the working solution. Additionally the benefit of the pre-dissolution is limited because there are many times more hydrogen consumed in the reaction compared with what can be made to dissolve in the working solution at a time. For the same reason a very limited profit is also gained from the invention presented in the US Patent Specification No. 4 428 922 where hydrogen is dissolved in the working solution before the reactor using a statical mixer.

In the fixed bed reactors can instead of round carrier particles also catalyst pieces having a different form be used. One way is to use a so-called honeycomb construction. In this the catalyst piece comprises a solid construction which is made up of several parallel through-going passages. Then the open diameters of the passages can be for example 0.5-10 mm. The thickness of the walls separating the passages can be for example 0.03-1 mm. The catalyst, e.g. palladium metal, has been fixed on the walls of the passages.

In the EP Patent Specification No. 0 041 814 a process has been presented wherein the above mentioned honeycomb construction has been made us of. In the mentioned process catalyst pieces having a honeycomb structure have been placed randomly in the reactor vessel through which the reactants are flowing. Such a reactor is, anyhow, not well suited for the case like the hydrogenation of the hydrogen peroxide process where there are in addition of the catalyst two other states present, the gaseous and the liquid. The mixing inside the vessel is not good enough for providing an efficient gas-liquid-dispersion nor for dissolving the gas in the liquid. Used by this way the in the passages of the honeycomb construction can not either such flow conditions be provided which would make the transfer of the gas molecules to the liquid and further to the catalyst surface rapid. When this type of reactor is used as a gas-liquid-reactor there is also a risk of uncontrolled canalization.

In the US Patent Specification No. 4 552 748 use has been made of the honeycomb construction in the hydrogenation reactor of the hydrogen peroxide process. In this a catalyst bed has been constructed by placing in the reactor one or more honeycomb catalyst pieces, so that the pieces together form parallel passages equal in length and parallel to the flow direction of the working solution. The catalyst has been fixed on the walls of the passages as a thin layer. The working solution is circulated through this reactor several times, preferably in parallel direction with hydrogen.

When a reactor according to the above mentioned patent is applied in the production scale, there are, anyhow, emerging some problems. First of these is related to the heat transfer. The hydrogenation reaction of the hydrogen peroxide process is exothermic so the temperature inside the reactor tends to rise. The temperature especially tends to rise in the middle of the honeycomb construction because the heat transfer from there outwards is slow. Thus the catalyst construction cannot be very long because an uneven temperature in the reactor is unfavorable for several reasons. If the catalyst construction on the other hand is made too short, its diameter has to be larger in order to obtain a sufficient reactor volume. A catalyst construction with a large diameter in turn causes the disadvantage that the flow of the working solution to be circulated in the reactor is too large.

Another difficulty is related to the even distribution of the liquid and gas in proportion to the cross-section. In the above mentioned patent it is said that the diameter of the flow passages is preferably 1-2 mm. The mixture of liquid and gas is difficult to distribute in proportion to the cross-section so that liquid and gas would flow in each passage approximately in the same proportion. This leads to uneven hydrogenation, in some passages the hydrogenation proceeds longer, in some it is retained on a lower level. The result is the decrease of both the selectivity and the average yield. Difficulties in the even distribution of the liquid and gas bubbles will arise no matter whether it is question of a counter-current reactor or a concurrent reactor operating either from top to bottom or from vice versa.

A third fact mentioned in the US Patent Specification No. 4 552 748 making the operation of the reactor is related to the amount of gas and liquid in the flow passages. The total rate of the hydrogenation in the flow passages is determined by the material transfer rates and the reaction rate. Depending on the circumstances there can exist different types of flows such as a so-called slug flow or bubble flow. By a certain flow type and certain conditions prevailing in the flow passage there exist an optimal ratio of the gas and liquid flow by which the maximal total rate of hydrogenation is obtained. Because with the gas moving on in the flow passage its amount is decreasing all the time as a result of the reaction the ratio of the flow rates of gas and liquid is changing as function of the pipe length. Hence, if the flow passages are of equal length, it is not possible to operate near the optimal ratio of flow rates of gas and liquid.

In the invention presented herein a fixed bed type reactor has been applied, so that the above mentioned drawbacks are missing or their effect is as small as possible. The essential characteristic features of the invention are se forth in the appended patent claims.

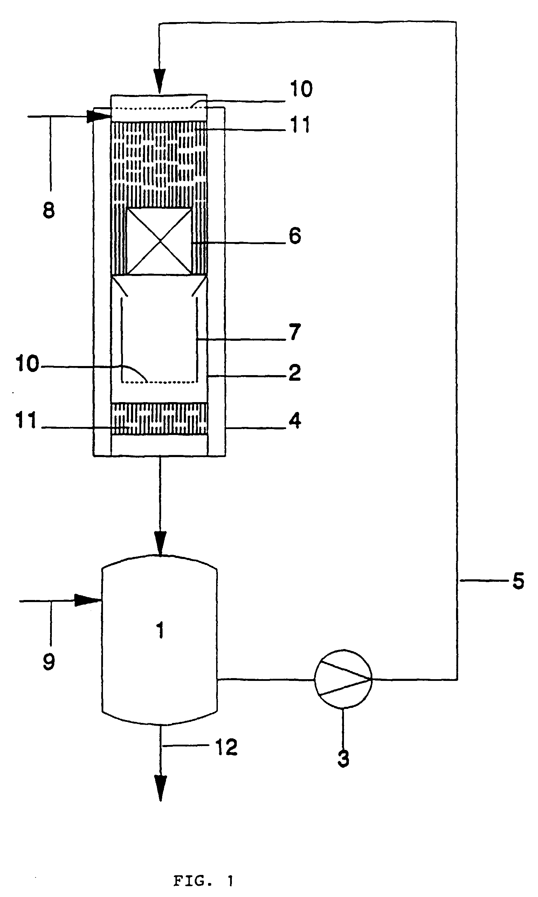

The structure of the hydrogenation reactor accoreding to the invention is presented schematically in Figure 1. Firstly, to the reactor belongs a circulation vessel 1 to which the working solution 9 to be hydrogenated is led. The working solution to be hydrogenated can also be let directly to the hydrogenation cycle 5. From the circulation vessel 1 the working solution is circulated several times through one or more reactor pipes 2 with the pump 3. The hydrated working solution 12 from the circulation vessel 1 is led further to the oxygenation.

In the reactor pipe 2 the working solution and hydrogen are flowing in a parallel direction from the top to the bottom. The catalyst layer 11 in the pipe contains passages which are parallel to the flow, i.e., vertical, and passages which are perpendicular to the flow. The calls of the flow passages have been coated with a porous layer of a durable carrier having a thickness of 5-300 µm. The porous carrier can be aluminum oxide, silica, silicate ja/tai activated carbon. The bearing structure of the catalyst layer is of metal sheet or foil having a thickness of 20-1000 µm. Correspondingly a ceramic structure can be used. The catalyzing material, e.g. palladium has been fixed on the walls of the flow passages e.g. by absorbing on the surface of a porous carrier. As the catalyzing matter it is in addition to palladium also possible to use e.g. rhodium, ruthenium, nickel, or a mixture thereof. The catalyst layer is in one part or preferably in several parts. In case the catalyst layer is in several parts, there is a liquid distributor between the different parts, for example a sieve plate 10. To the sieve plate can be connected a cylindrical wall 7, wherein the liquid is collected on the sieve plate as a layer. The hydrostatic pressure of this liquid layer furthers the division of the liquid as traces on the holes of the sieve plate.

If the catalyst layer is in several parts, there can in the lower end of each part be a mixing zone which is e.g. an equipment 6 comprised of a static mixer. This mixing zone distributes the liquid evenly in respect of the cross-section equalizing among other things the temperature gradient in direction of the cross-section. Also the structural parts of the mixing zone can be coated with a catalytically active material. According to Figure 1, the mixing zone is preferably stationed in the middle of the catalyst layer among other things due to the fact that the problems caused by the rise of the temperature are biggest on the center axis of the pipe.

The reactor pipes 2 can be provided with cooling jackets or other cooling equipment.

The presuure in the reactor during the hydrogenation is 1-15 bars, preferably the pressure is 2-6 bars. The temperature is kept at below 100°C, the preferred hydrogenation temperature is 40-60°C.

When carrying experiments with the above described reactor construction the following two facts were surprisingly discovered.

Firstly, division of the catalyst layer into several parts so that there is a liquid distributor, e.g. a sieve plate, and a mixing zone, between the different parts, will make the operation of the reactor more efficient.

Secondly, it was discovered that such catalyst layer containing passages which are parallel to the flow (vertical), and passages which are perpendicular to the flow, is clearly more efficient than a catalyst layer containing only passages parallel to the flow.

These two observations are clearly evidenced by the examples hereafter. The mentioned observations have been caused by physical and chemical reasons are mainly based on the fact that in the reactor according to the present invention more even conditions in respect of the cross-section, as to some extent in respect of the longitudal axis of the pipe, are obtained than in the nearest-by corresponding inventions.

In the examples explained in the following, examples 1 and 2 are comparable with each other. In them, a layer of support material was used which was similar and optimized in respect of the thickness, and same palladium content. Also the examples 3 and 4 are comparable with each other, because in them similar layers of the support material and palladium content were used. The support material layer and palladium content used in examples 3 and 4 deviated more from the optimal than in examples 1 and 2.

### Example 1

In the experiment which was carried out in a little scale a working solution was used which contained a mixture of ethylanthraquinone and tetrahydroethylanthraquinone, and as solvents a mixture a aromatic hydrocarbons and an organic phosphorus compound. The reactor was one according to the invention and contained a layer of catalyst with flow passages which were parallel to the main flow (vertical), and flow passages which were perpendicular to the main flow. The catalyst structure was composed of a metal support structure having a thin wall having a porous gamma-aluminum oxide support material fixed on its surface. Palladium had been impregnated into the aluminum oxide. The height of the catalyst layer was 2 500 mm and it had been divided into three parts. Between the parts, sieve plates were used as liquid distributors. The lower end of each catalyst layer there was a mixing zone comprised of a statical mixer. The experimental arrangement was continuously used. The unhydrogenated working solution was fed to the reactor at a level 60 litres/hour, and the same amount of product was removed. The circulation in the reactor was at such a level that the velocity of the liquid in the flow passages leading downwards was 0,09 m/second. The temperature in the reactor was 500C and the pressure 4,0 bars. Such an amount of hydrogen was fed to the reactor that its percentage by volume in reaction mixture in the upper end of the reactor pipe was 20%. The unreacted hydrogen was removed from the reactor at immediately after it had left the reactor pipe. The yield of the reactor under these conditions was 206 kg H₂O₂ / (kg Pd * h).

### Example 2

In this comparison experiment a catalyst layer was used having only vertival flow passages and the horizontal flow passages were totally missing. In other respects the experimental conditions and experimental reactor were exactly the same as in example 1. Especially it may be noted that the amount of palladium in the reactors was exactly the same, as the amount of hydrogen to be fed. The yield of the reactor was 198 kg H₂O₂ / (kg Pd * h). When the percentage of the hydrogen in the reaction mixture was below 20 % by volume the yield of the reactor of example 2 was even more clearly poor than that of the reactor of example 1.

### Example 3

The experimental reactor used in this comparative experiment was otherwise as the one used in example 2 except that the layer thickness of the porous support material and the amount of impregnated palladium were different, as a matter of fact, less preferable. In other respects the experimental conditions were as in example 2. When the amount of hydrogen to be fed was 20 % of the volume of the reaction mixture, a yield of 104 kg H₂O₂ / (kg Pd * h) was obtained. When the percentage of hydrogen was 10% by volume, a yield of of 87 kg H₂O₂ / (kg Pd * h) was obtained. These results are meant to be compared with the results of example 4.

### Example 4

The reactor used in this comparative experiment was otherwise like the one used in example 3 except that the catalyst bed was not in many parts but was uniform. Hence there were not either sieve plates to be used as liquid distributors between the parts of the layers, nor mixing zones. The amount of palladium was anyhow the same as in example, like other constructional details of the reactor and the testing conditions. When the hydrogen feed was 20 % by volume of the reaction mixture, the yield was 90 kg H₂O₂/(kg Pd * h), and when the kun hydrogen feed was 10 % by volume, the yield was 60 kg H₂O₂/(kg Pd * h).

## Claims

1. A process for the preparation of hydrogen peroxide by an anthraquinone process, wherein hydrogen or a gas containing hydrogen and a working solution are circulated through a solid catalyst layer in a reactor, **characterized** in that the flow is from top to downwards, and the catalyst layer has been assembled from at least one solid honeycomb part, on the walls of which catalytically active material has been fixed, and which contains both flow passages parallel to the main flow of the reactor, and flow passages perpendicular to this direction.

2. The process according to claim 1, **characterized** in that the catalyst layer consists of more than one solid honeycomb part, and that at the lower end of each catalyst layer there is a mixing zone, consisting of for example a statical mixer.

3. The process according to claim 2, **characterized** in that the constructional parts of the mixing zone are covered with the catalytically active material.

4. The process according to claim 1, 2 or 3, **characterized** in that the catalyst layer consists of more than one solid honeycomb part, and that the liquid flow between the different parts is redistributed in the direction of the cross-section with aid of a suitable liquid distributor, such as for example a sieve plate.

5. The process according to one of the claims 1 to 4, **characterized** in that the pressure in the reactor is 1-15 bars, preferably 2-6 bars, and the temperature in the reactor is below 100°C, preferably 40-60°C.

## Patentansprüche

1. Verfahren zur Herstellung von Wasserstoffperoxid durch ein Anthrachinon-Verfahren, wobei Wasserstoff oder ein Gas, das Wasserstoff enthält, und eine Arbeitslösung durch eine Festkatalysatorschicht in einem Reaktor zirkuliert werden, *dadurch gekennzeichnet,* daß der Fluß von oben nach unten gerichtet stattfindet und daß die Katalysatorschicht aus mindestens einem festen Bienenwabenteil zusammengesetzt wurde, an dessen Wänden katalytisch aktives Material fixiert wurde und das sowohl parallel zur Hauptflußrichtung des Reaktors als auch senkrecht zu dieser Richtung Flußpassagen enthält.

2. Verfahren gemäß Anspruch 1, *dadurch gekennzeichnet,* daß die Katalysatorschicht aus mehr als einem festen Bienenwabenteil besteht und daß am unteren Ende jeder Katalysatorschicht eine Mischzone vorgesehen ist, die zum Beispiel aus einer statischen Mischvorrichtung besteht.

3. Verfahren gemäß Anspruch 2, *dadurch gekennzeichnet,* daß die Konstruktionsteile der Mischzone von dem katalytisch aktiven Material bedeckt sind.

4. Verfahren gemäß einem oder mehreren der Ansprüche 1, 2 oder 3, *dadurch gekennzeichnet,* daß die Katalysatorschicht aus mehr als einem festen Bienenwabenteil besteht und daß der Flüssigkeitsfluß zwischen den verschiedenen Teilen mit Hilfe einer geeigneten Flüssigkeitsverteilungsvorrichtung, wie zum Beispiel einer Siebplatte, in Richtung des Querschnitts umverteilt wird.

5. Verfahren gemäß einem oder mehreren der Ansprüche 1 - 4, *dadurch gekennzeichnet,* daß der Druck im Reaktor 1 - 15 bar beträgt, vorzugsweise 2 - 6 bar und daß die Temperatur im Reaktor unterhalb von 100°C, vorzugsweise bei 40 - 60 °C, liegt.

## Revendications

1. Procédé pour la préparation de peroxyde d'hydrogène à l'aide d'un procédé à l'anthraquinone, dans lequel de l'hydrogène ou un gaz contenant de l'hydrogène et une solution de traitement circule à travers une couche de catalyseur solide sans un réacteur, **caractérisé** en ce que l'écoulement va du haut vers le bas et en ce que la couche de catalyseur a été assemblée à partir d'au moins une pièce solide alvéolaire, sur les parois de laquelle est fixée la matière catalytiquement active, et qui contient à la fois des passages d'écoulement parallèle à l'écoulement principal du réacteur, et des passages d'écoulement perpendiculaire à cette direction.

2. Procédé selon la revendication 1, **caractérisé** en ce que la couche de catalyseur est constituée de plus d'une pièce solide alvéolaire, et en ce qu'à l'extrémité inférieure de chaque couche de catalyseur se trouve une zone de mélange, constituée par exemple d'un mélangeur statique.

3. Procédé selon la revendication 2, **caractérisé** en ce que les pièces constructives de la zone de mélange sont recouvertes avec la matière catalytiquement active.

4. Procédé selon la revendication 1, 2 ou 3, **caractérisé** en ce que la couche de catalyseur est constituée de plus d'une pièce solide alvéolaire et en ce que l'écoulement de liquide entre les différentes pièces est redistribué dans la direction de la section transversale à l'aide d'un distributeur de liquide approprié, tel que par exemple une plaque de filtre.

5. Procédé selon l'une quelconque des revendications 1 à 4, **caractérisé** en ce que la pression dans le réacteur est de 1 à 15 bars, de préférence de 2 à 6 bars, et la température dans le réacteur est inférieure à 100°C, de préférence de 40 à 60°C.
